(19) Europäisches Patentamt

European Patent Office

Office européen des brevets

(11) **EP 1 699 246 A2**

(12) **EUROPEAN PATENT APPLICATION**

(43) Date of publication:
06.09.2006 Bulletin 2006/36

(51) Int Cl.:
*H04N 13/00* (2006.01)

(21) Application number: 06110164.8

(22) Date of filing: 20.02.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 03.03.2005 US 657724
06.04.2005 KR 2005028661

(71) Applicant: Samsung Electronics Co., Ltd.
Suwon-si, Gyeonggi-Do (KR)

(72) Inventors:
• **Cha, Kyung-hoom**
**Yongin-si, Gyeonggi-do (KR)**
• **Shestak, Sergey**
**140-1401Hwanggol Mauel**
**Yeongtong-gu, suwon-si, Gyeonggi-do (KR)**
• **Kim, Dae-sik**
**Yeongtong-gu, Suwon-si, Gyeonggi-do (KR)**

(74) Representative: **Read, Matthew Charles et al**
**Venner Shipley LLP**
**20 Little Britain**
**London EC1A 7DH (GB)**

(54) **Display**

(57) Provided is a two-dimension/three-dimension (2D/3D) switchable display. The 2D/3D switchable display includes: a display device which generates an image; a first optical element which includes convex lens cells; a second optical element which includes concave lens cells that coincide with the convex lens cells of the first optical element; and a driving unit which moves at least one of the first and second optical elements along an optical axis, wherein a two dimensional (2D) image is formed when the first optical element and the second optical element are matched with each other and a three dimensional (3D) image is formed when the first optical element and the second optical element are separated a predetermined distance from each other along the optical axis.

FIG. 2B

EP 1 699 246 A2

**Description**

The present invention relates to a display switchable between two-dimensional (2D) and three-dimensional (3D) display modes.

A three dimensional (3D) image is formed based on the principle of stereo image sensing by two human eyes. Binocular parallax occurring due to the eyes being separated by about 65 mm from each other is the most important factor for producing a cubic effect. 3D image displays can be divided into displays using glasses and glassesless displays. Glassesless displays produce a 3D image by separating left and right images without using glasses. Glassesless displays may be divided into parallax barrier type displays and lenticular type displays.

In a parallax barrier type display, images to be seen by left and right eyes are printed or photographed in an alternating vertical pattern produced using a very thin vertical lattice, sometimes referred to as a barrier. Thus, vertical pattern images intended for the left and right eyes are separated by the barrier. The left and right eyes see images at different viewpoints thereby resulting in a 3D image.

In the lenticular type display, images for left and right eyes are placed in focal planes of a lenticular lens. The lenticular lens is formed such that the images are separately formed in the left eye and the right eye according to lens refraction thereby resulting in a 3D image.

There is a need in the art to see a two dimensional (2D) image using a 3D image display. To fulfilthis need, a two-dimension/three-dimension (2D/3D) switchable display has been developed. A 2D/3D switchable display using a lenticular lens is disclosed in US-A-2004/0041747.

Figures 1A and 1B are sectional views of the conventional image display disclosed in US-A-2004/0041747. Referring to Figures 1A and 1B, the conventional image display 1 includes a display device 2 comprised of alternating pixels 41 and 42 respectively for a left eye 51 and a right eye 52, and first and second optical units 31 and 32 refracting light incident from the pixels 41 and 42.

Lens cells of the first optical unit 31 and lens cells of the second optical unit 32 have the same pitch. A 3D image is obtained by offsetting the first optical unit 31 relative to the second optical unit 32 by a half of the pitch, and a 2D image is obtained by moving the first optical unit 31 so that the first optical unit 31 and the second optical unit 32 are not offset. The conventional image display moves the first optical unit 31 in a direction 11 perpendicular to an optical axis to switch between a 2D image and a 3D image. Since the first optical unit 31 should be moved along the non-planar contour of the second optical unit 32, the moving mechanism of the first optical unit 31 is complicated.

Further, when a 3D image is formed, it is difficult to accurately move the first optical unit 31 by half of the pitch of the lens cells of the second optical unit 32. There is little crosstalk at an optimal point in a 3D mode, but crosstalk increases greatly at the centre of a viewing zone, thereby deteriorating image quality and brightness. Accordingly, an image not containing crosstalk can only be seen in a very narrow range.

The present invention seeks to provide an improved 2D/3D switchable display.

According to an aspect of the present invention, there is provided a 2D/3D switchable display comprising: a display device for generating an image; a first optical element which includes convex lens cells; a second optical element which includes concave lens cells which coincide with the convex lens cells of the first optical element; and a driving unit configured to move at least one of the first and second optical elements along an optical axis, such that a 2D image is formed when the first optical element and the second optical element are matched with each other and a 3D image is formed when the first optical element and the second optical element are separated a predetermined distance from each other along the optical axis.

The 3D image may be formed when the first optical element and the second optical element are separated from each other by a distance equal to the focal length of the first and second optical elements.

The first optical element may be a convex lenticular lens, and the second optical element may be a concave lenticular lens.

The first optical element and the second optical element may have equal and opposite focal lengths.

The convex lens cells and the concave lens cells may have the same pitch and the same curvature.

According to another aspect of the present invention, there is provided a 2D/3D switchable display comprising: a display device for generating an image; a first prism element which includes first prism units; a second prism element which includes second prism units that coincide with the first prism units of the first prism element; and a driving unit configured to move at least one of the first and second prism elements along an optical axis, wherein a 2D image is formed when the first prism element and the second prism element are matched with each other and a 3D image is formed when the first prism element and the second prism element are separated a predetermined distance from each other along the optical axis.

The first prism units and the second prism units may have the same pitch and the same prism angle.

Embodiments of the present invention will now be described, by way of example with reference to the accompanying drawings in which:

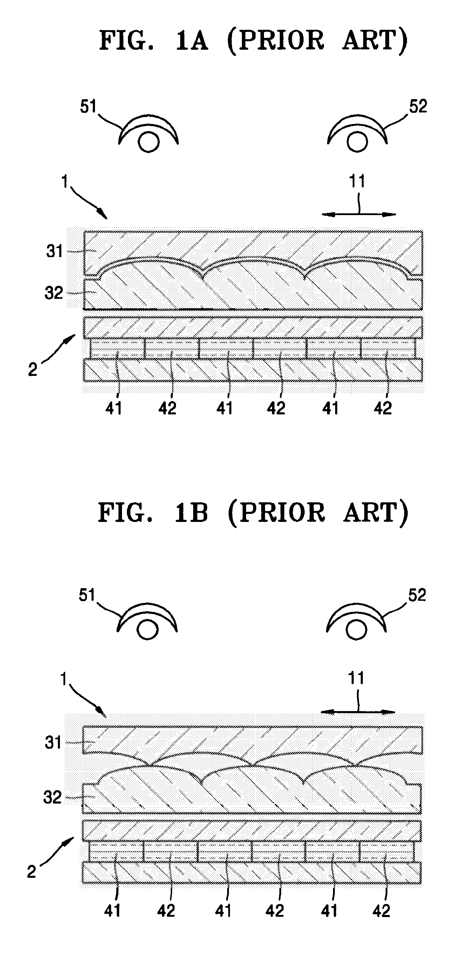

Figures 1A and 1B are sectional views of a conventional two-dimension/three-dimension (2D/3D) switchable display;
Figure 2A is a sectional view of an embodiment of a 2D/3D switchable display according to the present invention in a two dimensional (2D) mode;
Figure 2B is a sectional view of the 2D/3D switchable display shown in Figure 2A in a three dimensional (3D) mode;
Figure 3A illustrates simulation results of the image formed by the 2D/3D switchable display of Figure 2A in a 2D mode;
Figure 3B illustrates simulation results of the image formed by the 2D/3D switchable display of Figure 2B in a 3D mode;
Figures 4A to 4C are perspective views of examples of first and second optical elements included in the 2D and 3D switchable display of Figure 2A and 2B respectively;
Figure 5A is a sectional view of another embodiment of a 2D/3D switchable display according to the present invention in a 2D mode; and
Figure 5B is a sectional view of the 2D/3D switchable display of Figure 5A in a 3D mode.

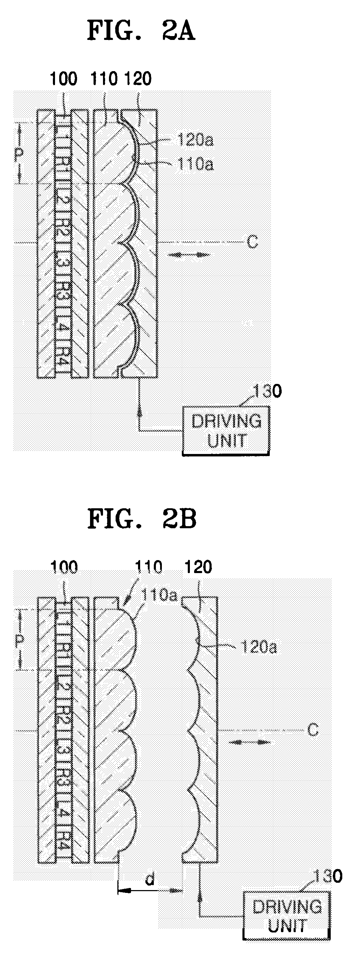

Figure 2A is a sectional view of an embodiment of a two-dimension/three-dimension (2D/3D) switchable display according to the present invention in a two dimensional (2D) mode. Figure 2B is a sectional view of the 2D/3D switchable display of Figure 2A in a three dimensional (3D) mode.

Referring to Figure 2A, the 2D/3D switchable display includes a display device 100 which generates an image, and a first optical element 110 and a second optical element 120 which switches between a 2D mode and a 3D mode.

The display device 100 may be a liquid crystal display (LCD). The first and second optical elements 110, 120 have complementary contours, and at least one of the first and second optical elements 110, 120 can be moved by a driving unit 130 along an optical axis C. As a non-limiting example, the driving unit 130 may move only the second optical element 120 along the optical axis C as shown in Figure 2A. The first optical element 110 may be a first lenticular lens which includes cylindrical convex lens cells 110a. The second optical element 120 may be a second lenticular lens which includes cylindrical concave lens cells 120a. The first optical element 110 and the second optical element 120 are disposed so that the cylindrical convex lens cells 110a and the cylindrical concave lens cells 120 can face each other.

The cylindrical convex lens cells 110a and the cylindrical concave lens cells 110b have the same focal length, the same pitch P, and the same curvature. Since the cylindrical convex lens cells 110 and the cylindrical concave lens cells 110b have complementary contours as shown in Figure 2A, the first optical element 110 and the second optical element 120 can be matched with each other. Put another way, the elements 110, 120 can be fitted intimately or married together. When the focal length of the first optical element 110 is "f", the focal length of the second optical element 120 is "-f". The 2D mode and a 3D mode can be switched between by moving the second optical element 120 along the optical axis C to adjust a distance, d, between the first optical element 110 and the second optical element 120. The principle of forming 2D and 3D images using the first and second optical elements 110, 120 will now be explained.

When the two optical elements 110, 120 respectively having the focal lengths $f_1$ and $f_2$ are separated by the distance d from each other, a composite focal length $f_{12}$ is expressed by the following equation:

$$f_{12} = \frac{2f_1 f_2}{f_1 + f_2 - d} \qquad (1)$$

When the first optical element 110 and the second optical element 120 are matched with each other as shown in Figure 2A, i.e. when d=0, the composite focal length $f_{12}$ is infinite according to Equation 1, such that incident light is transmitted through the first optical element 110 and the second optical element 120. That is, since the first optical element 110 and the second optical element 120 substantially act as one transparent plate, an image generated by the display device 100 is transmitted straight through the first and second optical elements 110, 120, and thus the same image is formed for left and right eyes to see a 2D image.

On the other hand, when the first optical element 110 and the second optical element 120 are separated by the distance d from each other as shown in Figure 2B, the first and second optical elements 110, 120 have the composite focal length $f_{12}$ according to Equation 1. For example, when the first optical element 110 and the second optical element 120 are separated from each other by the distance "d" equal to the focal length f ($d=f=f_1=f_2$), viewing zones of left and right eye images generated by the display device 100 are separated so that a viewer can see a 3D image. Using Equation 1, the composite focal length, $f_{12}$, with respect to the distance d between the first and second optical elements 110, 120 is expressed by the following equation:

$$f_{12} = \frac{f^2}{d} \qquad\qquad (2)$$

Referring to Equation 2, when d=f, the composite focal length $f_{12}$ of the first and second optical elements 110, 120 is equal to the focal length f. Accordingly, when the first and second optical elements 110, 120 are separated from each other by the focal length f, the two optical elements 110, 120 act as a single optical element. That is, the two lenticular lenses act as one lenticular lens, and thus a viewing zone of an image generated by the display device 100 is separated and focused to realize a 3D image.

When a 3D image is formed, left-eye image signals $L_1$ to $L_n$ and right-eye image signals $R_1$ to $R_n$, where "n" is a natural number, are output from pixels of the display device 100, and viewing zones of an image for a left eye and an image for a right eye are separated according to the left-eye image signals $L_1$ to $L_n$ and the right-eye image signals $R_1$ to $R_n$ by the first and second optical elements 110, 120, such that the left-eye image and the right-eye image are respectively formed in the left eye and the right eye to see a 3D image.

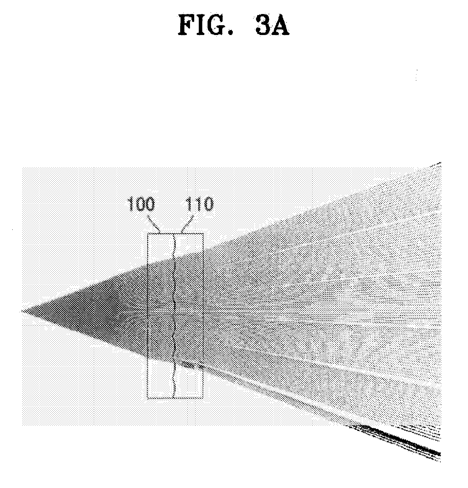

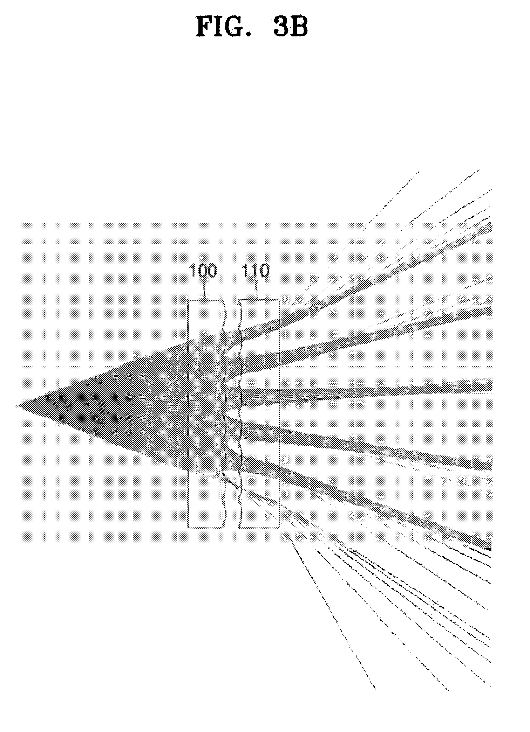

Figure 3A illustrates simulation results of a 2D image formed when the first and second optical elements 110, 120 are matched with each other. Figure 3B illustrates simulation result of a 3D image formed when the first and second optical elements 110, 120 are spaced from each other by a distance equal to the focal length "f" and viewing zones of a left-eye image and a right-eye image are separated such that the left-eye image and the right-eye image are respectively formed in left and right eyes.

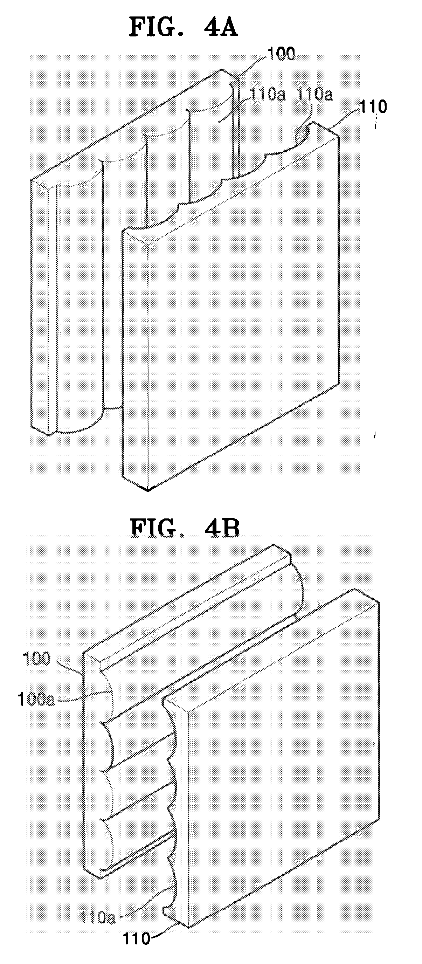

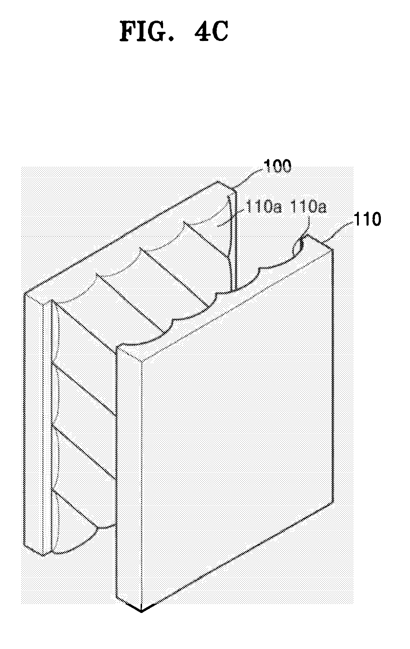

The cylindrical lens cells 110a, 120a of the first and second optical elements 110 and 120 may be arranged vertically as shown in Figure 4A, arranged horizontally as shown in Figure 4B, or inclined at a predetermined angle θ, as shown in Figure 4C.

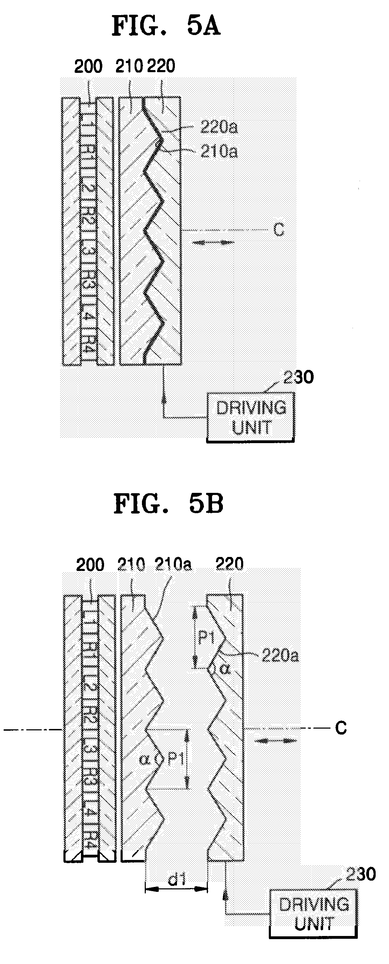

Figure 5A is a sectional view of another embodiment of a 2D/3D switchable display according to the present invention.

Referring to Figure 5A, the 2D/3D switchable display includes a display device 200 which generates an image, and a first prism element 210 and a second prism element 220 which switches between a 2D mode and 3D mode.

The display device 200 may be an LCD. The first prism element 210 includes first prism units 210a, and the second prism element 220 includes second prism units 220a. The first prism units 210a and the second prism units 220a may have the same pitch P, the same prism angle "α", and complementary contours. The first prism units 210a and the second prism units 220a face each other. The first prism element 210 and the second prism element 220 may have the same refractive index.

At least one of the first prism element 210 and the second prism element 220 may be moved by a driving unit 230 along an optical axis C. As a non-limiting example, the second prism element 220 may be moved along the optical axis C as shown in Figures 5A and 5B. Since the first prism element 210 and the second prism element 220 have the complementary contours, the two prism elements 210 and 220 can be matched with each other.

When the first prism element 210 and the second prism element 220 are matched with each other as shown in Figure 5A, since the two prism elements 210, 220 have the same refractive index, they act as one plate, such that an image generated by the display device 200 is transmitted through the first and second prism elements 210 and 220 and the same image is formed in left and right eyes to realize a 2D image.

Figure 5B is a sectional view of the 2D/3D image display of Figure 5A when the first prism element 220 is moved a distance d1 along the optical axis C. In this case, viewing zones of a left-eye image and a right-eye image are separated to realize a 3D image.

The 2D/3D switchable display can easily switch between a 2D mode and 3D mode by moving at least one of the pair of optical elements that have the complementary contours along the optical axis. Also, the 2D/3D switchable display uses both of the pair of optical elements on both sides of a 2D image and a 3D image without removing one of the optical elements to form a 3D image.

As described above, the image display can easily switch between a 2D mode and a 3D mode by moving at least one of the pair of optical elements that have the complementary contours along the optical axis. Accordingly, the image display can simply provide both a 2D image and a 3D image by adding one optical element that has a complementary contour of an existing 2D image display.

While the present invention has been particularly shown and described with reference to exemplary embodiments thereof, it will be understood by those of ordinary skill in the art that various changes in form and details may be made therein without departing from the scope of the present invention as defined by the following claims.

**Claims**

1. A 2D/3D switchable display comprising:

    a display device (100) for generating an image;
    a first optical element (110) comprising convex lens cells (110a);
    a second optical element (120) comprising concave lens cells (120a) that coincide with the convex lens cells of the first optical element; and
    a driving unit (130) configured to move at least one of the first and second optical elements along an optical axis (C), such that a 2D image is formed when the first optical element and the second optical element are matched with each other and a 3D image is formed when the first optical element and the second optical element are separated a predetermined distance from each other along the optical axis.

2. A 2D/3D switchable display according to claim 1, wherein the 3D image is formed when the first optical element and the second optical element are separated from each other by a distance equal to the focal length of the first and second optical elements.

3. A 2D/3D switchable display according to claim 1 or 2, wherein each of the first optical element and the second optical element includes cylindrical lens cells that are arranged vertically or horizontally or are inclined at a predetermined angle.

4. A 2D/3D switchable display according to claim 1 or 2, wherein the first optical element is a convex lenticular lens, and the second optical element is a concave lenticular lens.

5. A 2D/3D switchable display according to claim 1 or 2, wherein the first optical element and the second optical element have equal and opposite focal lengths.

6. A 2D/3D switchable display according to claim 1 or 2, wherein the convex lens cells and the concave lens cells have the same pitch and the same curvature.

7. A 2D/3D switchable display comprising:

    a display device (200) for generating an image;
    a first prism element (210) comprising first prism units (210a);
    a second prism element (220) comprising second prism units (220a) that coincide with the first prism units of the first prism element; and
    a driving unit (230) configured to move at least one of the first and second prism elements along an optical axis (C), such that a 2D image is formed when the first prism element and the second prism element are matched with each other and a 3D image is formed when the first prism element and the second prism element are separated a predetermined distance from each other along the optical axis.

8. A 2D/3D switchable display according to claim 7, wherein the first prism units and the second prism units have the same pitch and the same prism angle.

# FIG. 1A (PRIOR ART)

# FIG. 1B (PRIOR ART)

EP 1 699 246 A2

# FIG. 2A

100 110 120

120a
110a

C

130

DRIVING
UNIT

# FIG. 2B

100 110 120

110a

120a

C

d

130

DRIVING
UNIT

7

# FIG. 3A

# FIG. 3B

## FIG. 4A

## FIG. 4B

# FIG. 4C

# FIG. 5A

# FIG. 5B